Europäisches Patentamt
European Patent Office
Office européen des brevets

(11) Numéro de publication: 0 095 412
A1

# DEMANDE DE BREVET EUROPEEN

(21) Numéro de dépôt: 83400989.6

(22) Date de dépôt: 17.05.83

(51) Int. Cl.³: C 08 G 61/12
H 01 B 1/12

(30) Priorité: 25.05.82 FR 8209049

(43) Date de publication de la demande:
30.11.83 Bulletin 83/48

(84) Etats contractants désignés:
DE GB IT NL SE

(71) Demandeur: THOMSON-CSF
173, Boulevard Haussmann
F-75379 Paris Cedex 08(FR)

(72) Inventeur: Dubois, Jean-Claude
THOMSON-CSF SCPI 173, bld Haussmann
F-75379 Paris Cedex 08(FR)

(72) Inventeur: Camps, Marcel
THOMSON-CSF SCPI 173, bld Haussmann
F-75379 Paris Cedex 08(FR)

(72) Inventeur: Gazard, Maryse
THOMSON-CSF SCPI 173, bld Haussmann
F-75379 Paris Cedex 08(FR)

(72) Inventeur: Montheard, Jean-Pierre
THOMSON-CSF SCPI 173, bld Haussmann
F-75379 Paris Cedex 08(FR)

(72) Inventeur: Pascal, Thierry
THOMSON-CSF SCPI 173, bld Haussmann
F-75379 Paris Cedex 08(FR)

(72) Inventeur: Douillard, Alain
THOMSON-CSF SCPI 173, bld Haussmann
F-75379 Paris Cedex 08(FR)

(72) Inventeur: Seytre, Gérard
THOMSON-CSF SCPI 173, bld Haussmann
F-75379 Paris Cedex 08(FR)

(74) Mandataire: Wang, Pierre et al,
THOMSON-CSF SCPI 173, Bld Haussmann
F-75379 Paris Cedex 08(FR)

## (54) Polymères contenant des hétérocycles et des noyaux aromatiques, et matériaux organiques conducteurs formés à partir de ces polymères.

(57) L'invention concerne des matériaux polymères rendus conducteurs par incorporation d'un dopant.

L'invention a pour objet des matériaux polymères formés à partir d'un premier monomère Ar possèdant au moins un noyau aromatique et d'un second monomère qui est hétérocycle conjugué à 5 chaînons, le polymère répondant à la formule chimique générale:

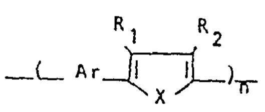

où X est le soufre ou le sélénium, $R_1$ et $R_2$ sont soit l'hydrogène soit des groupements alkyle, alkoxyle ou hydroxyle, n représente le degré de polymérisation. L'invention a aussi pour objet les matériaux organiques formés à partir de ces polymères et rendus conducteurs par la présence d'un dopant.

L'invention s'applique notamment à la fabrication d'électrodes, de jonctions, de barrières Schottky.

Croydon Printing Company Ltd

# POLYMERES CONTENANT DES HETEROCYCLES ET DES NOYAUX AROMATIQUES ET MATERIAUX ORGANIQUES CONDUCTEURS FORMES A PARTIR DE CES POLYMERES

L'invention concerne des polymères rendus conducteurs par incorporation d'un dopant. Ces polymères contiennent des hétérocycles et des noyaux aromatiques.

Un grand nombre de polymères conducteurs ont été découverts jusqu'à ce jour. Ils sont constitués d'un polymère de base comportant des liaisons conjuguées et d'un dopant qui contribue à réaliser un complexe à transfert de charges. Le polymère le plus ancien et le plus largement étudié est le polyacétylène $(CH)_n$ qui présente l'intérêt de pouvoir être obtenu sous forme de films mais qui présente l'inconvénient d'être instable au contact de l'air. On peut obtenir des conductivités élevées, jusqu'à $10^3\ \Omega^{-1}.cm^{-1}$, en le dopant avec des composés accepteurs d'électrons tels que les halogènes (en particulier l'iode), l'acide sulfurique, le pentafluorure d'arsenic ou avec des composés donneurs d'électrons tels que les métaux alcalins. Cependant, le polymère dopé avec ces composés n'est généralement pas stable dans le temps et ceci a conduit la Demanderesse à rechercher de nouveaux dopants qui remédient à cet inconvénient : les halogénures des métaux de transition, et qui ont fait l'objet de la demande de brevet français N° 81.13 157 déposée le 3 Juillet 1981. Ce dopage n'élimine cependant pas la grande réactivité du polyacétylène vis-à-vis de l'oxygène.

Afin de pallier ces inconvénients, l'invention propose de nouveaux matériaux conducteurs comportant un polymère de base et un donneur ou un accepteur d'électrons, le polymère étant synthétisé par polycondensation de deux monomères dont l'un est formé de noyaux aromatiques et l'autre étant un hétérocycle conjugué à 5 chaînons. Cette structure confère au polymère une bonne stabilité au cours du temps et en température ainsi qu'une faible réactivité à l'oxygène.

L'invention a donc pour objet un matériau polymère formé à partir d'un premier et d'un second monomère, caractérisé en ce que le premier monomère possède au moins un noyau aromatique et que le second monomère est un hétérocycle conjugué à 5 chaînons, ledit matériau polymère répondant à la formule chimique générale :

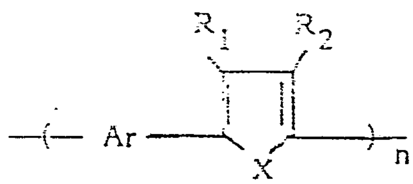 dans laquelle

. Ar représente ledit premier monomère, de type p-phénylène, m-phénylène, biphénylène, anthracène, fluorène, phénanthrène et les dérivés substitués de ces composés ;

. 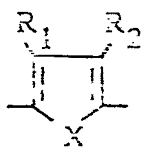 représente ledit second monomère où X est le soufre ou le sélénium, $R_1$ et $R_2$ sont soit l'hydrogène soit des groupements alkyle, alkoxyle ou hydroxyle ;

. n représente le degré de polymérisation.

Il existe des polymères conducteurs qui sont stables thermiquement et qui ne réagissent pas avec l'oxygène de l'air. Ces polymères sont formés à partir de monomères contenant des noyaux aromatiques. On peut citer le poly-p-phénylène, le polysulfure de phénylène et le polyoxyde de phénylène.

Parmi les polymères contenant des hétérocycles et synthétisés par des voies classiques, seul le polythiophène a été décrit. Il est rendu conducteur par dopage à l'iode ce qui permet d'obtenir une conductivité pouvant être $10^9$ fois plus grande que le polymère non dopé. Des polymères hétérocycles conducteurs ont été obtenus par polymérisation électrochimique de monomères en utilisant comme électrolyte un composé dont l'anion joue le rôle de dopant. Parmi ces polymères, on peut citer le polypyrrole et le polythiophène.

Les matériaux organiques conducteurs selon l'invention utilisent un polymère de base qui répond à la formule générale

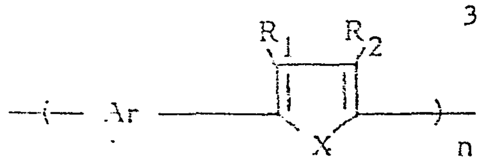 dans laquelle :

. Ar est un radical aromatique du type p-phénylène, m-phénylène, biphénylène, anthracène, fluorène, phénanthrène et les dérivés substitués de ces composés ;

.X représente le soufre ou le sélénium ;

. $R_1$ et $R_2$ sont soit l'hydrogène soit des groupements alkyle, alkoxyle ou hydroxyle.

Le facteur n représente le degré de polymérisation.

Parmi les polymères les plus représentatifs de l'invention, on peut citer :

. le poly (p-phénylène co 2,5 thiénylène) de formule

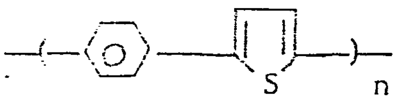 ;

. le poly (4,4' biphénylène co 2,5 thiénylène) de formule

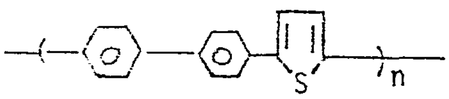 ;

. le poly (p-phénylène co 2,5 sélénophène) de formule

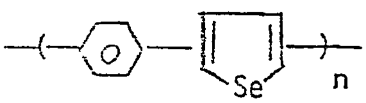 ;

. le poly (4,4' biphénylène co 2,5 sélénophène de formule

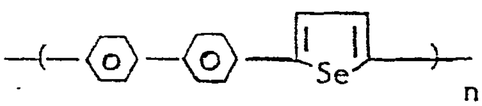 .

La méthode de synthèse utilisée pour obtenir ces polymères est dérivée de celle décrite par YAMAMOTO (dans "Chemical Letters 353 (1977)" et "Journal of Polymer Science, Polymer Letters Edition 17, 181 (1979)"), et qui est utilisée pour préparer des homopolymères d'un monomère A. Elle comprend 3 étapes :

- préparation d'un dérivé bihalogéné du monomère A, par exemple le dérivé bibromé Br-A-Br ;

- préparation d'un monomagnésien :

  $Br\text{-}A\text{-}Br + Mg \rightarrow Br\text{-}A\text{-}MgBr$

- couplage en présence d'un catalyseur (complexe des métaux de transition : Ni, Cr, Pd, Co, Fe, etc ...) :

  $x Br - A - MgBr \longrightarrow Br -(- A -)_x MgBr + (x-1) Mg Br_2$.

Mode opératoire :

Les copolymères selon l'invention sont préparés en 3 étapes :

a) préparation de 2 dérivés bihalogénés symétriques par exemple

Br-Ar-Br et 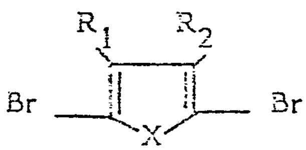

b) transformation d'un de ces dérivés en dérivé bimagnésien (ou réactif de GRIGNARD), par exemple :

$Br\text{-}Ar\text{-}Br + 2\ Mg \longrightarrow BrMg\text{-}Ar\text{-}Mg\ Br$

c) couplage entre ce dérivé bimagnésien et le dérivé bihalogéné non transformé en présence d'un complexe des métaux de transition qui joue le rôle de catalyseur :

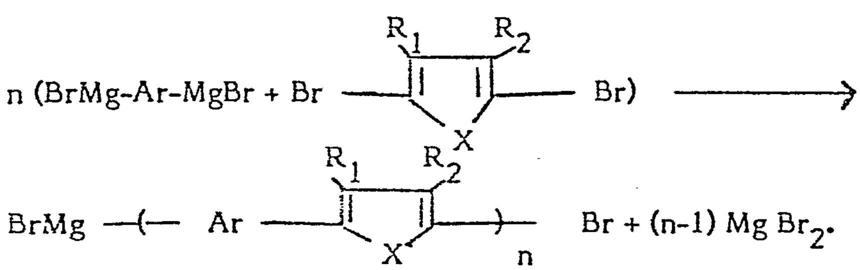

Le copolymère est obtenu sous la forme d'une poudre insoluble dans les solvants organiques et stable jusqu'à des températures qui peuvent atteindre 400° C. Du fait de l'insolubilité du copolymère, le degré de polymérisation n ne peut être déterminé. Il peut être dopé suivant les méthodes classiques de dopage au moyen de donneurs ou d'accepteurs d'électrons tels que les éléments alcalins, par exemple le lithium, les halogènes, le pentafluorure d'arsenic $As F_5$, le pentafluorure d'antimoine $Sb F_5$, ou un composé à base d'ammonium. La conductivité du copolymère dopé augmente sensiblement et dépend de la nature et de la concentration du dopant.

On va donner ci-après quelques exemples d'élaboration de matériaux organiques conducteurs selon l'invention.

Premier exemple : Obtention d'un poly (p-phénylène co 2,5 thiénylène) conducteur.

a) préparation de 2 dérivés bihalogénés symétriques.

Il s'agit du p-dibromophényle : Br - 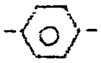 - Br et du dibromothiophène

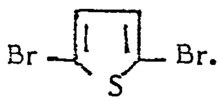

b) transformation du p-dibromophényle en un dérivé bimagnésien.

On prépare 2 solutions : une solution A contenant 11,8 g de p-dibromophényle dissous dans 50 ml de tétrahydrofuranne fraîchement distillé et une solution B contenant 2,45 g de magnésium dispersé dans 10 ml de tétrahydrofuranne fraîchement distillé. La solution A est lentement versée dans la solution B à laquelle on a ajouté une paillette d'iode pour catalyser la réaction de formation du réactif de GRIGNARD. Le mélange réactionnel est agité puis porté à reflux pendant 48 heures jusqu'à disparition totale du magnésium.

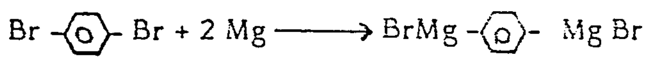

c) couplage entre ce dérivé bimagnésien et le dérivé bihalogéné non transformé.

La réaction s'effectue en présence de 100 mg de dichloro [1,3 bis (diphénylphosphino) propane-nickel] qui sert de catalyseur. On ajoute à la solution contenant l'organomagnésien, obtenue à l'étape b, 12,1 g de dibromothiophène. Le mélange réactionnel est porté à reflux pendant 2 heures. Il est ensuite versé dans une solution contenant 400 ml de méthanol, 100 ml d'eau et 5 ml d'acide chlorhydrique. On recueille par filtration un précipité qui est lavé au méthanol puis séché en étuve. Les fractions solubles de ce précipité sont extraites au soxhlet pendant 3 heures avec du tétrahydrofuranne. On recueille ainsi le précipité : 6,77 g d'un polymère rouge brique insoluble dans les solvants organiques et stable jusqu'à 400° C. Il a pour formule : 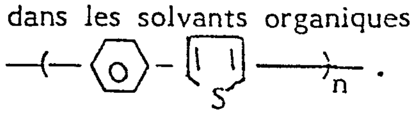 .

Voici un exemple de réalisation d'une pastille conductrice. La poudre de polymère est frittée sous une pression de 4000 $kgf/cm^2$ dans un moule de façon à en réaliser une pastille de 13 mm de diamètre et d'environ 500 microns d'épaisseur. Sa résistivité à température ambiante est alors de $10^{12}$ $\Omega$.cm. Une solution saturée d'iode dans l'hexane est préparée. On y plonge la pastille pendant 24 heures en maintenant un balayage d'argon. La pastille est ensuite rincée dans l'hexane puis séchée sous vide pendant 2 heures. On constate alors que son poids a augmenté de 15 % du fait de l'incorporation d'iode en tant que dopant. La conductivité du produit obtenu est alors environ $10^7$ fois plus grande que celle du copolymère de base,c'est-à-dire que sa résistivité est de l'ordre de $10^5$ $\Omega$ .cm.

<u>Deuxième exemple</u> : Obtention d'un poly (4,4' biphénylène co 2,5 thiénylène) conducteur.

a) préparation de 2 dérivés bihalogénés symétriques.

Il s'agit du dibromodiphényle de formule 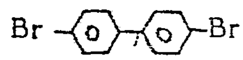 et du dibromothiophène de formule 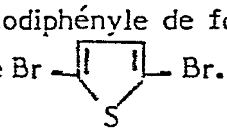.

b) transformation du dibromodiphényle en un dérivé bimagnésien.

La méthode de synthèse est la même que celle donnée dans l'exemple 1 sauf que la solution A contient 15,6 g de dibromodiphényle.

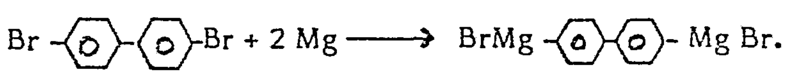


c) couplage entre ce dérivé bimagnésien et le dérivé bihalogéné non transformé.

Lorsque l'organomagnésien a été formé, on ajoute à la solution qui le contient 12,1 g de dibromothiophène et 100 mg du complexe de nickel cité dans l'exemple 1 en tant que catalyseur. Après avoir effectué les mêmes traitements que dans l'exemple précédent, on recueille 8,92 g d'un polymère rouge brique insoluble dans les solvants organiques et stable jusqu'à 400° C. Il a pour formule : 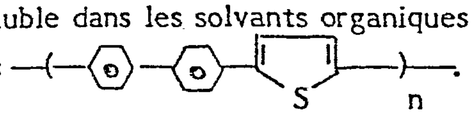

On peut alors réaliser une pastille conductrice par frittage. Avec une partie de la poudre obtenue on peut, par exemple, réaliser une pastille de 10 mm de diamètre et de 300 microns d'épaisseur. Sa résistivité à température ambiante est alors de l'ordre de $3.10^{14}$ Ω.cm. On plonge cette pastille dans une solution d'hexane saturée d'iode, pendant 24 heures. La pastille est ensuite rincée dans l'hexane puis séchée sous vide pendant 2 heures. Après cette dernière opération, on constate que son poids a augmenté de 10 % et que sa conductivité est environ $10^7$ fois plus grande que celle du copolymère de base, c'est-à-dire que sa résistivité est de l'ordre de $3.10^7$ Ω.cm.

Les matériaux organiques conducteurs selon l'invention ont des propriétés électriques qui leur permettent d'être utilisés comme électrodes, par exemple pour la fabrication de batteries d'accumulateurs. On peut également les employer pour la fabrication de condensateurs. Lorsque ces matériaux sont faiblement dopés, ils possèdent des propriétés de semi-conduction de type p ou de type n suivant la nature du dopant. On peut alors les utiliser pour la fabrication de jonctions, de barrières Schottky, et les employer notamment dans le domaine des cellules solaires. Ils peuvent également entrer dans la composition de dépôts antistatiques dans différents types d'application.

REVENDICATIONS

1. Matériau polymère formé à partir d'un premier et d'un second monomère, caractérisé en ce que le premier monomère possède au moins un noyau aromatique et que le second monomère est un hétérocycle conjugué à 5 chaînons, ledit matériau polymère répondant à la formule chimique générale :

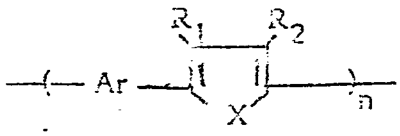 dans laquelle

- Ar représente ledit premier monomère, de type p-phénylène, m-phénylène, biphénylène, anthracène, fluorène, phénanthrène et les dérivés substitués de ces composés ;
- 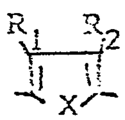 représente ledit second monomère où X est le soufre ou le sélénium, $R_1$ et $R_2$ sont soit l'hydrogène soit des groupements alkyle, alkoxyle ou hydroxyle ;
- n représente le degré de polymérisation.

2. Matériau polymère selon la revendication 1, caractérisé en ce que ledit deuxième monomère est le thiophène.

3. Matériau polymère selon la revendication 1, caractérisé en ce que ledit deuxième monomère est le sélénophène.

4. Matériau polymère selon l'une quelconque des revendications 1 à 3, caractérisé en ce qu'il est rendu conducteur électriquement par la présence d'un dopant donneur ou accepteur d'électrons.

5. Matériau polymère selon la revendication 4, caractérisé en ce que le dopant donneur d'électrons est un atome du groupe alcalin, le lithium ou un composé à base d'ammonium.

6. Matériau polymère selon la revendication 4, caractérisé en ce que le dopant accepteur d'électrons est un atome du groupe halogène, le pentafluorure d'arsenic $AsF_5$ ou le pentafluorure d'antimoine $SbF_5$.

Office européen des brevets

# RAPPORT DE RECHERCHE EUROPEENNE

0095412
Numero de la demande

EP 83 40 0989

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| A | JOURNAL OF POLYMER SCIENCE: POLYMER LETTERS EDITION, vol. 18, no. 1, janvier 1980, pages 9-12, John Wiley & Sons, Inc., New York, USA "Preparation of thermostable and electric-conducting poly(2,5-thienylene)" * Pages 9-12 * | 1 | C 08 G 61/12<br>H 01 B 1/12 |
| A | JOURNAL OF POLYMER SCIENCE: POLYMER LETTERS EDITION, vol. 19, no. 7, juillet 1981, pages 347-353, John Wiley & Sons, Inc., New York, USA "Polymerization of aromatic nuclei. XXVIII. Synthesis and properties of poly(2,5-selenienylene)" * Pages 347-353 * | 1 | |
| | | | DOMAINES TECHNIQUES RECHERCHES (Int. Cl. 3) |
| A | GB-A-1 000 679 (BASF) * Revendications 1,2 * | 1 | C 08 G<br>H 01 B<br>C 08 L |

Le présent rapport de recherche a été établi pour toutes les revendications

| Lieu de la recherche | Date d'achèvement de la recherche | Examinateur |
|---|---|---|
| LA HAYE | 24-08-1983 | MALHERBE Y.J.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention
E : document de brevet antérieur, mais publié à la date de dépôt ou après cette date
D : cité dans la demande
L : cité pour d'autres raisons
& : membre de la même famille, document correspondant